Europäisches Patentamt

(19) European Patent Office

Office européen des brevets

(11) Numéro de publication : **0 457 642 A1**

## (12) DEMANDE DE BREVET EUROPEEN

(21) Numéro de dépôt : **91401159.8**

(22) Date de dépôt : **02.05.91**

(51) Int. Cl.⁵ : **C08F 36/18, C08F 2/24**

(30) Priorité : **11.05.90 FR 9005886**

(43) Date de publication de la demande :
**21.11.91 Bulletin 91/47**

(84) Etats contractants désignés :
**AT BE CH DE DK ES FR GB GR IT LI LU NL SE**

(71) Demandeur : **DISTUGIL**
**Les Miroirs - défense 3, 18, avenue d'Alsace**
**F-92400 Courbevoie (FR)**

(72) Inventeur : **Sauterey, François**
**rue de la Tour**
**Chant-Village, F-38560 Chant sur Drac (FR)**

(74) Mandataire : **Seugnet, Jean Louis**
**RHONE-POULENC CHIMIE SERVICE**
**BREVETS CHIMIE 25 Quai Paul Doumer**
**F-92408 Courbevoie Cédex (FR)**

(54) **Procédé de production de polychloroprène.**

(57) Procédé de polymérisation du chloroprène en émulsion aqueuse en présence d'un système émulsifiant comprenant un agent tensio-actif ionique non carboxylique et deux agents tensio-actifs non ioniques ayant une différence HLB égale au moins à trois unités.
Utilisation notamment pour la préparation d'adhésifs.

EP 0 457 642 A1

La présente invention se rapporte à un procédé de polymérisation du chloroprène ou copolymérisation du chloroprène avec des monomères appropriés en émulsion aqueuse radicalaire en présence d'un système émulsifiant ne comportant pas de savons d'acides carboxyliques.

Les polymères de chloroprène sont formés de façon classique par polymérisation en émulsion, en présence d'agents émulsifiants. Lorsque la polymérisation est effectuée en milieu alcalin, les agents émulsifiants comprennent ordinairement des sels alcalins de colophane.

Mais dans certains domaines d'applications telles que les formulations pour adhésifs avec solvant la présence de colophane en quantité trop élevée est susceptible de provoquer une séparation de phases en présence d'oxydes métalliques et n'est donc pas souhaitable. Lorsque la polymérisation en milieu acide est nécessaire, par exemple pour copolymériser le chloroprène avec des acides carboxyliques insaturés, l'emploi de colophane n'est pas possible du fait du pKa des acides résiniques correspondants . On doit alors avoir recours à d'autres tensio-actifs ioniques tels que ceux contenant des groupes sulfates ou sulfonates.

Le brevet FR-A-2333818 propose un procédé de production de latex concentrés de polychloroprène avec utilisation pour 100 parties de monomères de 3 à 6 parties en poids d'émulsifiants ioniques le cas échéant conjointement avec 0,5 à 6 parties en poids d'émulsifiants non ioniques. Ces taux relativement élevés d'émulsifiant ionique du type sulfonate ou sulfate présentent plusieurs inconvénients. Durant la polymérisation, la réaction exothermique est difficile à contrôler, la chaleur engendrée pouvant excéder la capacité de transfert de chaleur de l'installation de polymérisation. La maîtrise de la réaction est d'autant plus délicate que la concentration en monomères dans la phase aqueuse est élevée ; or pour de nombreuses applications, il est souhaitable de disposer de latex à forte teneur en solides de préférence au moins égale à 55 %.

L'addition conjointe d'un agent non-ionique permet, de manière connue, de costabiliser l'émulsion et d'abaisser le point de gel. Selon le document précité la quantité de l'émulsifiant ionique ne peut toutefois être abaissée à un taux inférieur à 3 % des monomères polymérisables. En outre, l'emploi de quantités élevées de non-ioniques a des conséquences négatives sur la cinétique de la réaction et sur le contrôle de la distribution des tailles de particules.

Un autre inconvénient de l'emploi de taux élevés d'émulsifiant ionique du type sulfate ou sulfonate réside dans le fait qu'il est difficile, voire impossible, de déstabiliser le latex résultant par le froid pour isoler le polymère.

D'autre part l'utilisation des latex en l'état peut être gênée dans certains cas par un manque de stabilité colloïdale en présence d'ions métalliques polyvalents. Dans certains domaines d'application comme, par exemple, le réagréage, l'imprégnation, les colles aqueuses formulées, il est souhaitable que le latex ne coagule pas prématurément en présence d'ions tels que $Ca^{++}$, $Zn^{++}$, $Al^{+++}$ ou autres qui peuvent être présents dans les formulations.

Le brevet FR-A-2231725 ou CA-A 1031489 décrit un procédé permettant d'obtenir des latex de polychloroprène ne coagulant pas lors de l'addition d'électrolytes ou autres produits présents dans les compositions à base de latex, par exemple l'oxyde de zinc. Selon ce procédé, le chloroprène est polymérisé dans une émulsion sans savons carboxyliques en présence d'un alcool polyvinylique. Le latex obtenu manque de stabilité au stockage par suite de l'hydrolyse du colloïde.

La présente invention a pour but de remédier aux inconvénients précités. Plus particulièrement l'invention a pour objet de fournir un procédé de polymérisation du chloroprène en l'absence de savons carboxyliques qui permet d'obtenir des latex stables au stockage et résistants aux ions métalliques polyvalents.

Un autre but de l'invention est de fournir un procédé permettant d'obtenir des latex à taux élevé de solides. Encore un autre but de l'invention est de proposer un procédé de polymérisation du chloroprène en l'absence de savons carboxyliques permettant l'obtention de latex destabilisables par la technique du froid. Un but plus particulier de l'invention est de fournir des latex de copolymères de chloroprène à groupements fonctionnels notamment carboxyliques stables au stockage et résistants aux ions métalliques polyvalents.

Conformément à la présente invention, le procédé de production de latex de polychloroprène par polymérisation en émulsion aqueuse du chloroprène ou d'un mélange de chloroprène avec jusqu'à 50 % en poids d'autres monomères copolymérisables en présence d'un initiateur radicalaire et d'émulsifiants est caractérisé en ce que le système émulsifiant comprend a) au moins un agent tensio-actif ionique non carboxylique et b) au moins deux agents tensio-actifs non ioniques qui diffèrent l'un de l'autre par leur nombre HLB d'une valeur égale ou supérieure à 3 unités.

Dans la mise en oeuvre du procédé le chloroprène peut être polymérisé seul ou en mélange avec jusqu'à 50 % en poids d'un ou plusieurs monomères copolymérisables avec le chloroprène tels que les composés vinylaromatiques, par exemple le styrène, les vinyltoluènes, les vinyl-naphtalènes ; les acides monocarboxyliques et dicarboxyliques insaturés par exemple l'acide acrylique, l'acide méthacrylique, l'acide itaconique, l'acide maléique, l'acide vinylacétique, l'acide 2-(carboxy-méthyl) acrylique ; les dérivés esters et nitriles des acides carboxyliques insaturés en particulier les acrylates et méthacrylates d'alkyle dont le groupe alkyle possède 1 à 6 atomes de carbone, l'acrylo-nitrile, le méthacrylonitrile ; les dioléfines conjuguées par exemple le 1,3-buta-

EP 0 457 642 A1

diène, l'isoprène, le 1-chlorobutadiène, le 2-3 dichloro-butadiène, le 2,3 diméthylbutadiène ; les esters, éthers et cétones vinyliques par exemple l'acétate de vinyle, l'éther méthyl vinylique, le méthylvinylcétone.

Dans une forme préférée de l'invention pour l'obtention de latex et caoutchoucs à groupements fonctionnels, le chloroprène est copolymérisé avec un acide carboxylique $\alpha$-$\beta$ insaturé en quantité pouvant aller jusqu'à 10 % en poids par rapport aux monomères. L'expression "monomères" se rapporte à la somme totale du chloroprène, de l'acide carboxylique et, éventuellement, d'un autre monomère insaturé ne comportant pas de groupe carboxylique libre tels que ceux précédemment cités. L'acide acrylique et l'acide méthacrylique sont plus particulièrement préférés à raison de 1 à 5 % en poids et plus préférentiellement de 1,5 à 2,5 %. Comme autre monomère on cite plus spécialement les esters acryliques et méthacryliques et en particulier le méthacrylate de méthyle.

La présence d'un agent tensio-actif ionique est essentielle à la stabilité physico-chimique de l'émulsion. Il est avantageux que cet agent tensio-actif soit anionique et stable aux acides. Des exemples d'agents tensio-actifs non carboxyliques comprennent les sels de métaux alcalins ou d'ammonium dérivés de l'acide sulfurique ou de l'acide phosphorique tels que les sels de sodium, de potassium, ou d'ammonium d'alkylsulfates, d'arylsulfates, d'alkylarylsulfates, d'alkyl-sulfonates, d'arylsulfonates, d'alkylarylsulfonates, d'alkylphosphates, d'arylphosphates, d'alkylarylphosphates, d'alcoxyéthylsulfonates, d'alcoxyéthylphosphonates. Les radicaux alkyle de tels agents tensioactifs sont habituellement des groupes à chaîne moyenne ou longue ayant de 8 à environ 25 atomes de carbone. Des agents tensio-actifs représentatifs comprennent le lauryl-sulfate de sodium, le lauryl-sulfonate de sodium, les alcane-sulfonates de sodium ou paraffine-sulfonate de sodium, le dodécylbenzène sulfonate de sodium, le dodécylbenzène sulfate de sodium, les isethionates de sodium.

En association avec l'agent tensio-actif anionique on utilise selon l'invention au moins deux agents tensio-actifs non-ioniques dont le nombre HLB présente une différence au moins égale à 3 unités. Le nombre HLB (balance hydrophile-lipophile) est connu ou peut-être calculé à l'aide de l'équation HLB = E/5 où E est le % en poids des unités hydrophiles. On peut se référer à l'ouvrage "Encyclopedia of emulsion technology vol. 1 - Basic theory - Paul BECHER (1983) pp 217-220". L'intervalle entre le nombre HLB des deux tensio-actifs non-ioniques est préférentiellement supérieur à 4 unités. Les deux tensio-actifs peuvent être de nature hydrophile (HLB > 11) ou lipophile (HLB ≤ 11).

Il est souvent préférable pour une bonne réalisation de l'invention d'utiliser conjointement un agent tensio-actif lipophile et un agent tensio-actif hydrophile pour l'obtention de latex concentrés insensibles aux ions polyvalents.

Pour le choix du tensio-actif non-ionique on peut se référer par exemple à l'ouvrage "Surfactant Science Series - Vol. 19 - edited by John CROSS (1987) pp 3-28". On peut citer à titre d'exemples représentatifs : les mono-, di- et trialkylphénols polyoxyéthylénés en particulier, par exemple, l'octylphénolpolyglycolether, le nonylphenolpolyglycol-ether, le dinonylphénolpolyglycoléther, le triisobutylphénol polyglycoléther, le dodécylphénolpolyglycoléther ; les alcools polyoxyéthylénés et/ou polyoxypropylénés en particulier les alcools gras polyoxyéthylénés ; les esters polyoxyéthylénés et/ou polyoxypropylénés d'acide carboxyliques, en particulier les esters d'acides gras comme le laurate, le stéarate ou l'oléate de polyoxyéthylène ; les mono et diglycérides polyoxyéthylènes ; les alkylamides d'acides gras polyoxyéthylénés et/ou polyoxypropylénés ; les esters de sorbitan ou de polyoxyéthylène sorbitan en particulier le monolaurate de sorbitan ; le monolaurate de polyoxyéthylène sorbitan ; les copolymères blocs oxyde d'éthylène - oxyde de propylène.

Les quantités d'émulsifiants utilisées sont gouvernées par la stabilité et la viscosité de l'émulsion pendant la polymérisation en fonction du système choisi, de la nature et de la concentration en monomères de l'émulsion.

La quantité de tensio-actif ionique est favorablement comprise entre 1 et 3 parties en poids pour 100 parties en poids de monomère(s), de préférence entre 1,8 et 2,8 parties et plus préférentiellement entre 1,8 et 2,2 parties . Les tensio-actifs non-ioniques sont utilisés en quantité totale de 1 à 3 parties pour 100 parties en poids de monomère(s) selon un rapport en poids compris 1/3 et 3/1. Le rapport sera déplacé à l'avantage du tensio-actif le plus organophile dans le cas où il est recherché une destabilisation par le froid. Inversement, le rapport peut être déplacé à l'avantage du tensio-actif le plus hydrophile dans le cas d'une utilisation du latex en l'état.

On a décrit jusqu'ici l'utilisation combinée de 3 tensio-actifs correspondants à 3 molécules distinctes. Bien entendu, l'homme du métier sait qu'il est possible de remplacer le tensio-actif ionique et un des 2 tensio-actifs non ioniques par une seule molécule combinant les 2 fonctions.

Par exemple, on peut utiliser un lauryl alcool comportant 12 moles d'oxyéthylène (par exemple le Polystep® B 23 de la Société STEPAN Europe ).

Le procédé selon l'invention vise donc également, selon une variante, l'utilisation d'un tensio-actif ionique et l'un des deux tensio-actifs non ionique constitués par une seule et même molécule.

La quantité totale (tensio actif ionique + tensio actifs non ioniques) est favorablement comprise entre 3 et 6 parties pour 100 parties en poids de monomère(s) et plus préférentiellement entre 3,5 et 5 parties.

3

La polymérisation est réalisée de manière classique, en continu ou en discontinu, en présence d'initiateurs radicalaires et d'un agent de transfert de chaînes et/ou de soufre élémentaire. La concentration en monomères présents dans l'émulsion peut être comprise entre 30 et 70 % en poids du poids total de l'émulsion. Pour la production de latex à teneur élevée en matières solides on utilise 50 à 95 parties d'eau pour 100 parties en poids de monomères.

Comme initiateur de radicaux libres, on utilise conventionnellement des péroxydes organiques ou minéraux ou des systèmes redox. Les agents de transfert de chaîne ou agents modifiants peuvent être choisis parmi l'iodoforme, les disulfures d'alkylxanthogène, les alkyl-mercaptans ou autres composés organiques sulfurés.

La présence d'un agent dispersant tel que, par exemple, le produit de condensation de formaldéhyde et de l'acide naphtalène sulfonique n'est pas nécessaire à la bonne réalisation de l'invention. On peut cependant en ajouter de faibles quantités avant, pendant, ou après la polymérisation.

La température de polymérisation est favorablement comprise dans l'intervalle de 30 à 70°C et plus préférentiellement entre 40 et 60° C. Dans le cas où la polymérisation est réalisée en milieu acide, le pH de l'émulsion peut être ajusté à la valeur désirée à l'aide d'un acide minéral ou organique, par exemple l'acide acétique. L'exothermicité et les variations de pH au cours de la réaction peuvent éventuellement être régulées par addition d'un électrolyte.

Lorsque le taux de conversion désiré est atteint, la polymérisation est arrêtée par addition d'agents inhibiteurs conventionnels. Le procédé de l'invention permet d'atteindre des taux de conversion élevés pouvant être supérieurs à 95 %. Après élimination du monomère résiduel, et addition éventuelle de composés antioxygènes, le latex peut être stocké en l'état ou bien le caoutchouc peut être isolé d'une façon quelconque par exemple par coagulation sur tambour froid, lavage et séchage.

L'emploi du système émulsifiant selon l'invention permet de préparer des latex stables de polymères de chloroprène, et tout particulièrement des latex à groupes réactifs avec un taux de solides élevé, ayant pour avantage d'être résistants aux ions métalliques polyvalents et utilisables dans une gamme de pH très étendue. En addition le procédé permet de contrôler la distribution de la taille des particules en faisant varier la nature et le taux des tensio-actifs non-ioniques. L'une des applications les plus importantes de ces latex et caoutchoucs est la préparation d'adhésifs. Les latex de polychloroprène comprenant des groupes carboxyliques sont utilisés par exemple dans le collage des feuilles métalliques sur un substrat cellulosique, panneaux de mousse polyuréthane ou de polystyrène expansé. Le latex peut être incorporé sans inconvénient dans des formulations contenant de l'oxyde de zinc, de l'oxyde de magnésium ou d'autres charges telles que argiles, craie...

Les latex peuvent être encore employés avantageusement dans l'industrie du bâtiment en additif aux ciments par exemple pour le réagréage de dalles en ciment ou la réalisation de dalles flottantes.

Les exemples suivants sont donnés à titre non limitatif.

Dans tous les exemples les parties et les pourcentages sont exprimés en poids sauf indication contraire.

## Détermination de la stabilité aux ions Ca$^{++}$ :

20 g de latex à tester sont introduits dans un becher de 150 ml. Une solution aqueuse à 10 % de chlorure de calcium est ajoutée goutte à goutte dans le latex qui est agité avec une tige en verre. On mesure le nombre de ml versés jusqu'à ce que se produise une coagulation. Si la coagulation n'a pas commencé après versement de 100 ml, la mesure est stoppée.

## Détermination de la stabilité mécanique :

Le latex à tester est dilué à l'eau à une concentration de 40 % en poids de matières sèches. 200 ml de latex dilué sont introduits dans le récipient de l'agitateur HAMILTON ® . On ajoute 5 g d'anti-mousse, le latex est agité à 10.000 t/mn pendant 30 mn . Le latex est ensuite filtré sur un tamis de 100 meshs préalablement taré. Le tamis après filtration est séché 30 mn à 140 °C puis pesé. Le résultat est exprimé en % en poids de résidu sec pour 100 g de latex.

## Stabilité au stockage :

Elle est jugée "excellente" si l'on n'observe pas de déstabilisation après 6 mois de stockage à température ambiante et "bonne" si l'un n'observe pas de destabilisation après 3 mois de stockage.

## Extrait sec

CLa teneur en matières sèches des latex est déterminée en éliminant l'eau et autres composants volatils

4

à partir d'un échantillon préalablement pesé, à 145 C° en étuve sous vide. L'extrait sec est exprimé en % par rapport au poids de l'échantillon initial.

## EXEMPLE 1

|  | Parties en poids |
|---|---|
| Chloroprène........................................................ | 98 |
| Acide méthacrylique............................................. | 2 |
| Eau adoucie...................................................... | 65 |
| n.dodécyl mercaptan............................................. | 0,2 |
| n.alcane sulfonate secondaire EMULSOGEN EP * - Sté HOECHST... | 2 |
| Polymère séquencé polyoxyéthylène/polyoxypropylène/ polyoxyéthylène (HLB = 2.7) PLURONIC 3100 * - Sté BASF........ | 1,25 |
| Polymère séquencé polyoxyéthylène/polyoxypropylène polyoxyéthylène (HLB = 8.3) PLURONIC 6400 * - Sté BASF........ | 1,25 |

On procède à la polymérisation à 45° C sous atmosphère d'azote à un pH de 3 en réglant un débit convenable d'initiateur constitué d'une solution aqueuse à 4 % de persulfate de sodium.

La polymérisation est arrêtée à un taux de conversion de 99 % par addition d'une émulsion de chloroprène contenant 0,01 partie de butyl-catechol et 0,003 parties de phénothiazine.

On élimine ensuite le monomère résiduel par entraînement à la vapeur. Le latex strippé présente un taux de solides de 61 % et un diamètre moyen de particles de 150 nm.

La stabilité du latex est évaluée comme précédemment décrit :

– stabilité mécanique à

pH 3     0,5 % de résidus secs

pH 7     0 % " " "

pH 12    0 % " " "

– stabilité aux ions $Ca^{++}$ > 100 ml (absence de coagulation)

– stabilité au stockage : excellente.

## EXEMPLE 2

|  | Parties en poids |
|---|---|
| Chloroprène........................................................ | 79 |
| Acide méthacrylique............................................. | 1 |
| Méthacrylate de méthyle......................................... | 20 |
| Eau adoucie...................................................... | 95 |
| n.dodécyl mercaptan............................................. | 0,2 |
| n.alcane sulfonate secondaire (EMULSOGEN EP *- Sté HOECHST).... | 2,5 |
| Tributylphénolglycoléther à 4 moles OE (HLB = 8) (SAPOGENAT TO40 * - Sté HOECHST).............................. | 1,25 |
| Tributylphénolpolyglycoléther à 30 moles OE (HLB = 17) (SAPOGENAT T300 * - Sté HOECHST).............................. | 1,25 |

La polymérisation est conduite sous atmosphère d'azote à 45° C en réglant le débit d'initiateur constitué d'une solution aqueuse à 4 % de persulfate de sodium. Le pH de l'émulsion est de 2,2.

La polymérisation est arrêtée à un taux de conversion de 99,8 % par addition d'une émulsion contenant 0,01 partie de t.butylcatechol et 0,03 parties de phénothiazine. L'émulsion est ramenée à un pH = 7 par une solution de NaOH puis le monomère résiduel est éliminé par entraînement à la vapeur.

Le latex final a un taux de solides de 53 % et un diamètre moyen de particules de 125 nm.

Stabilité mécanique à

pH = 7      0,1 % de résidus

pH = 12      0 % " "

Stabilité aux ions $Ca^{++}$ > 100 ml (absence de coagulation)

Stabilité au stockage = excellente.

## EXEMPLE 3

|  | Parties en poids |
|---|---|
| Chloroprène...................................................... | 100 |
| Eau adoucie...................................................... | 100 |
| n.dodécyl mercaptan............................................. | 0,15 |
| n.alcane sulfonate secondaire (EMULSOGEN EP *- Sté HOECHST).... | 2 |
| Tributylphénolpolyglycoléther à 4 moles OE (HLB = 8) (SAPOGENAT TO40 * - Sté HOECHST)................................ | 1,5 |

On procède à la polymérisation selon le mode opératoire décrit dans l'exemple 1.

La polymérisation est arrêtée à un taux de conversion de 80 %.

Durée de polymérisation : 5 heures. Il ne se forme pas de coagulat pendant la réaction. L'écart de température maximum observé entre la jacquette et le réacteur est de 4° C.

Le taux de solides du latex obtenu et de 41 % avec un diamètre moyen de particules de 145 nm.

Stabilité mécanique à pH = 7      0,6 % de résidus

Stabilité aux ions calcium > 100 ml

## EXEMPLES 4 à 34

Toutes les polymérisations sont réalisées comme dans l'exemple 1.

Les exemples 4 à 26 selon l'invention avec leurs résultats sont montrés dans les tableaux I à IV.

Les exemples 27 à 34 (Tableau V) sont des exemples comparatifs. Les exemples 27 à 30 montrent l'effet de la quantité de sulfonate, utilisé comme seul agent tensio-actif, sur l'exothermicité de la réaction, sur la stabilité de l'émulsion pendant la polymérisation, de même que sur la stabilité mécanique et la stabilité aux ions calcium du latex obtenu. Les exemple 31 à 34 illustrent l'association de deux parties de sulfonate avec soit un seul non-ionique hydrophile ou lipophile, soit deux non-ioniques de HLB voisin. On constate que la stabilité de l'émulsion pendant la polymérisation est encore insuffisante et qu'il y a une forte inhibition en début de réaction (exemples 32 à 34). Lorsque le non-ionique est lipophile (exemple 32) le latex obtenu n'est pas stable mécaniquement et la taille des particules est élevée et non contrôlable.

Les polychoroprènes des exemples 6, 8 et 23 ont été isolés par coagulation du latex amené à pH = 7 sur un tambour refroidi à - 20°C. Le film obtenu est lavé et séché. Le comportement au cours de la coagulation du latex est bon.

## TABLEAU I

| EXEMPLES | 4 | 5 | 6 | 7 | 8 | 9 | 10 |
|---|---|---|---|---|---|---|---|
| Chloroprène | 98 | 98 | 98 | 98 | 98 | 97 | 95 |
| Acide méthacrylique | 2 | 2 | 2 | 2 | 2 | 3 | 5 |
| Eau adoucie | 94 | 94 | 94 | 94 | 94 | 94 | 94 |
| n.dodecylmercaptan | 0,2 | 0,2 | 0,2 | 0,2 | 0,2 | 0,2 | 0,2 |
| n alcane sulfonate secondaire (1) | 1,6 | 1,8 | 2 | 2,5 | 2 | 2 | 2 |
| Tributylphénol polyglycol éther (HLB= 8) (2) | 2 | 2 | 2 | 2 | 1,25 | 1,25 | 1,25 |
| Tributylphénol polyglycol éther (HLB=17) (3) | 1 | 1 | 1 | 1 | 1,25 | 1,25 | 1,25 |
| Conversion (%) | 98,9 | 99,5 | 97,2 | 99,7 | 99,7 | 99,8 | 97,0 |
| Extrait sec final (%) | 51,4 | 50,8 | 50,9 | 53,2 | 54,7 | 51,3 | 49,5 |
| Temps de polymérisation (h) | 9 | 8 | 8 | 6 | 7 | 9 | 7 |
| Poids de coagulats formés au cours de la polymérisation (g) | 0 | 0 | 0 | 0 | 0 | 0 | 0 |
| Diamètre des particules(nm) | 185 | 150 | 150 | 125 | 175 | 160 | 120 |
| Stabilité mécanique (%) pH = 7 | 4 | 0,7 | 0 | 0 | 0,08 | 0 | 0 |
| pH = 12 | 0 | 0 | 0 | 0 | 0 | 0 | 0 |
| Stabilité aux ions Ca 2+ (ml) | > 100 | > 100 | > 100 | > 100 | > 100 | > 100 | > 100 |
| Stabilité au stockage | Excellente | Excellente | Excellente | Excellente | Excellente | Excellente | Excellente |

(1) EMULSOGEN EP* - Sté HOECHST
(2) SAPOGENAT TO40* - Sté HOECHST
(3) SAPOGENAT T300* - Sté HOECHST

**TABLEAU II**
**VARIATION DU TAUX DE NON-IONIQUES**

| EXEMPLES | 1 | 11 | 12 | 13 | 14 | 15 |
|---|---|---|---|---|---|---|
| Chloroprène | 98 | 98 | 98 | 98 | 98 | 98 |
| Acide méthacrylique | 2 | 2 | 2 | 2 | 2 | 2 |
| Eau adoucie | 65 | 65 | 65 | 65 | 65 | 65 |
| n.dodecylmercaptan | 0,2 | 0,2 | 0,2 | 0,2 | 0,2 | 0,2 |
| n alcane sulfonate secondaire (1) | 2 | 2 | 2 | 2 | 2 | 2 |
| Polymère séquencé POE/POP/POE (HLB=8,3) (2) | 1,25 | 1,8 | 1,25 | 0,97 | 0,93 | 0,92 |
| Polymère séquencé POE/POP/POE (HLB=2,7) (3) | 1,25 | 1,2 | 0,5 | 0,72 | 1,44 | 0,98 |
| Conversion (%) | 99,0 | 97,7 | 97,8 | 96,0 | 95,0 | 97,5 |
| Extrait sec final (%) | 61,0 | 59,0 | 59,0 | 57,1 | 57,0 | 58,5 |
| Temps de polymérisation (h) | 10 | 12 | 10 | 11 | 18 | 9 |
| Poids de coagulats formés au cours de la polymérisation (g) | 0 | 0 | 0 | 0 | 0 | 0 |
| Diamètre des particules(nm) | 150 | 185 | 200 | 195 | 225 | 160 |
| Stabilité mécanique (%) pH = 3 | 0,5 | 0,7 | 0,9 | 0,6 | 0,8 | 0,7 |
| pH = 7 | 0 | 0,2 | 0,5 | 0,2 | 0,4 | 0,4 |
| pH = 12 | 0 | 0 | 0 | 0 | 0 | 0 |
| Stabilité aux ions Ca 2+ (ml) | > 100 | > 100 | > 100 | > 100 | > 100 | > 100 |
| Stabilité au stockage | Excellente | Excellente | Excellente | Excellente | bonne | Excellente |

(1) EMULSOGEN EP • - Sté HOECHST
(2) PLURONIC 6400 • - Sté BASF
(3) PLURONIC 3100 • - Sté BASF

## TABLEAU III
## VARIATION DE LA NATURE DE NON-IONIQUES

| EXEMPLES | 16 | 17 | 18 | 19 | 20 | 21 | 22 |
|---|---|---|---|---|---|---|---|
| Chloroprène | 98 | 98 | 98 | 98 | 98 | 97 | 98 |
| Acide méthacrylique | 2 | 2 | 2 | 2 | 2 | 2 | 2 |
| Eau adoucie | 94 | 94 | 94 | 94 | 94 | 65 | 65 |
| n.dodecylmercap tan | 0,2 | 0,2 | 0,2 | 0,2 | 0,2 | 0,2 | 0,2 |
| n alcane sulfon ate secondaire (1) | 2 | 2 | 2 | 2 | 2 | 2 | 2 |
| Monostéarate de sorbitan (HLB=4,7) (2) | - | - | - | 1,5 | 1,5 | - | - |
| Tributylphénol polyglycol éther (HLB=8) (3) | 1,5 | 1,5 | 1,5 | - | - | - | - |
| Alkylphenoxy polyéthoxy éthanol (HLB=13,5) (4) | - | - | - | - | - | 0,7 | 1,4 |
| Tributylphénol polyglycol éther (HLB=17) (5) | 1,5 | - | - | - | - | - | - |
| Nonylphénol éthoxylé (HLB=17) (6) | - | 1,5 | - | 1,5 | - | - | - |
| Octylphénol éthoxylé (HLB=18) (7) | - | - | 1,5 | - | 1,5 | 1,4 | 0,7 |
| Conversion (%) | 98,4 | 99,0 | 97,7 | 99,8 | 99,7 | 97,8 | 98,0 |
| Extrait sec final (%) | 49,2 | 44,0 | 46,7 | 49,0 | 49,5 | 58,0 | 58,9 |
| Temps de polymérisation (h) | 5 | 7 | 5 | 5,5 | 6 | 15 | 13 |
| Poids de coagulats formés au cours de la polymérisation (g) | 0 | 0 | 0 | 0 | 0 | 0 | 0 |
| Diamètre des particules(nm) | 125 | 168 | 175 | 122 | 145 | 193 | 195 |
| Stabilité mécanique (%)   pH = 7 | 0,05 | 0,03 | 0,08 | 0,06 | 0,04 | 0 | 0,1 |
| pH = 12 | 0 | 0 | 0 | 0 | 0 | 0 | 0 |
| Stabilité aux ions Ca 2+ (ml) | > 100 | > 100 | > 100 | > 100 | > 100 | > 100 | > 100 |
| Stabilité au stockage | Excellente | Excellente | Excellente | Excellente | Excellente | Excellente | Excellente |

(1) EMULSOGEN EP® - Sté HOECHST
(2) DISPONIL 100® - Sté SIDOBRE SINNOVA
(3) SAPOGENAT TO40 A® - Sté HOECHST
(4) DISPONIL SMS 120® - Sté SIDOBRE SINNOVA
(5) SAPOGENAT T300® - Sté HOECHST
(6) SINNOPAL NP 307® - Sté SIDOBRE SINNOVA
(7) SINNOPAL OP 407® - Sté SIDOBRE SINNOVA

EP 0 457 642 A1

## TABLEAU IV
## VARIATION DE LA QUANTITE D'EAU

| EXEMPLES | 23 | 24 | 25 | 26 |
|---|---|---|---|---|
| Chloroprène | 98 | 98 | 98 | 98 |
| Acide méthacrylique | 2 | 2 | 2 | 2 |
| Eau adoucie | 94 | 70 | 60 | 55 |
| n.dodecylmercaptan | 0,2 | 0,2 | 0,2 | 0,2 |
| n.alcane sulfonate secondaire (1) | 2 | 2 | 2 | 2 |
| Tributylphénol polyglycol éther (HLB= 8) (2) | 1,4 | 1,4 | 1,4 | 1,4 |
| Tributylphénol polyglycol éther (HLB=17) (3) | 0,7 | 0,7 | 0,7 | 0,7 |
| Conversion (%) | 95,8 | 95,2 | 95,5 | 97,5 |
| Extrait sec final (%) | 48,5 | 55,0 | 58,8 | 61,4 |
| Temps de polymérisation (h) | 9 | 13 | 14 | 13 |
| Poids de coagulats formés au cours de la polymérisation (g) | 0 | 0 | 0 | 0 |
| Diamètre des particules(nm) | 192 | 200 | 210 | 220 |
| Stabilité mécanique (%)   pH = 3 | 1,5 | 0,7 | 1,5 | 2 |
| pH = 7 | 0,12 | 0,10 | 0,10 | 0,15 |
| pH = 12 | 0 | 0 | 0 | 0 |
| Stabilité aux ions Ca 2+ (ml) | > 100 | > 100 | > 100 | > 100 |
| Stabilité au stockage | Excellente | Excellente | Excellente | Excellente |

(1) EMULSOGEN  EP * - Sté HOECHST
(2) SAPOGENAT TO40  - Sté HOECHST
(3) SAPOGENAT T300  - Sté HOECHST

EP 0 457 642 A1

## TABLEAU V
## EXEMPLES COMPARATIFS

| EXEMPLES | 27 | 28 | 29 | 30 | 31 | 32 | 33 | 34 |
|---|---|---|---|---|---|---|---|---|
| Chloroprène | 100 | 100 | 98 | 98 | 98 | 98 | 98 | 100 |
| Acide méthacrylique | - | - | 2 | 2 | 2 | 2 | 2 | 2 |
| Eau adoucie | 150 | 100 | 65 | 65 | 65 | 65 | 69 | 69 |
| n.dodecylmercaptan | 0,2 | 0,2 | 0,2 | 0,2 | 0,2 | 0,2 | 0,2 | 0,2 |
| n alcane sulfonate secondaire (1) | 2 | 2 | 2 | 3 | 2 | 2 | 2 | 2 |
| Tributylphénol polyglycol éther (HLB=8) (2) | - | - | - | - | - | 2 | 1 | - |
| Polymère séquencé POE/PO/POE (HLB=8,3) (3) | - | - | - | - | - | - | 1 | - |
| Tributylphénol polyglycol éther (HLB=17) (4) | - | - | - | - | 2 | - | - | 1 |
| Octylphénol éthoxylé (HLB=18) (5) | - | - | - | - | - | - | - | 1 |
| Conversion (%) | 99,0 | 99,0 | 99,6 | 98,3 | 99,6 | 98,4 | 98,2 | 98,0 |
| Extrait sec final (%) | 38,6 | 48,6 | 59,6 | 59,0 | 59,0 | 59,1 | 57,1 | 57,0 |
| Temps de polymérisation (h) | 13 | 10 | 13 | 12 | 16 | 15 | 14 | 12 |
| Poids de coagulats formés au cours de la polymérisation (g) | 990 | 1250 | 500 | 50 | 100 | 45 | 55 | 60 |
| Diamètre des particules(nm) | 112 | 115 | 250 | 108 | 178 | 300 | 215 | 190 |
| Stabilité mécanique (%) pH = 7 | Prise | en | masse | 0,6 | * | 2,5 | 0,3 | 0,3 |
| Stabilité aux ions Ca 2+ (ml) | > 100 | > 100 | > 100 | 5 | > 100 | > 100 | > 100 | > 100 |
| Ecart de température maximum entre la jacquette et le réacteur (°C) | 6 | 7 | 9 | 17 | 10 | 9 | 7 | 9 |
| Inhibition (h) | Non | Non | Non | Non | Non | 1,5 | 3 | 3 |

(1) EMULSOGEN EP® - Sté HOECHST
(2) SAPOGENAT TO40 ® - Sté HOECHST
(3) PLURONIC 6400® - Sté BASF
(4) SAPOGENAT T300® - Sté HOECHST
(5) SINNOPAL OP407® -Sté SIDOBRE SINNOVA

* : le latex moussant trop cette propriété n'a pas pu être mesurée

EP 0 457 642 A1

**Revendications**

1. Procédé de production de latex de polychloroprène par polymérisation en émulsion aqueuse du chloroprène avec jusqu'à 50 % en poids d'un ou plusieurs autres monomères copolymérisables en présence d'un initiateur radicalaire et d'émulsifiants caractérisé en ce que le système émulsifiant comprend a) au moins un agent tensio-actif ionique non carboxylique et b) aux moins deux agents tensio-actifs non ioniques qui différent l'un de l'autre par leur nombre HLB d'une valeur égale ou supérieure à 3 unités.

2. Procédé selon la revendication 1 caractérisé en ce que le système émulsifiant comprend, pour 100 parties en poids de monomère(s) 1 à 3 parties en poids d'agent tensio-actif ionique non carboxylique a) et 1 à 3 parties en poids au total des deux agents tensio-actifs non ioniques ayant une différence HLB au moins égale à 3 unités b).

3. Procédé selon la revendication 1 caractérisé en ce que l'agent tensio-actif a) est choisi parmi les sels de métaux alcalins ou d'ammonium dérivés de l'acide sulfurique ou de l'acide phosphorique.

4. Procédé selon la revendication 3 caractérisé en ce que l'agent tensio-actif a) est choisi parmi les alkylsulfates et les alkyl-sulfonates en $C_8$-$C_{25}$.

5. Procédé selon les revendications 1 ou 2 caractérisé en ce que la différence HLB entre les deux agents tensio-actifs b) est supérieure à 4 unités.

6. Procédé selon l'une des revendications 1 à 5 caractérisé en ce que un agent tensio-actif non ionique est hydrophile et un agent tensioactif non ionique est lipophile.

7. Procédé selon l'une quelconque des revendications 1 à 6 caractérisé en ce que le tensio-actif ionique et l'un des deux tensio-actifs non ionique sont constitués par une seule molécule.

8. Procédé selon l'une des revendications de 1 à 7 caractérisé en ce que le monomère copolymérisable avec le chloroprène est choisi parmi les acides mono- et dicarboxyliques α, β insaturés.

9. Procédé selon la revendication 8 dans lequel le monomère copolymérisable et l'acide méthacrylique.

10. Procédé sleon l'un des revendications 1 à 9, comprenant un (méth)acrylate et d'alkyle ayant de 1 à 6 atomes de carbone dans le groupe alkyle.

11. Procédé selon l'une des revendications 1 à 10 caractérisé en ce que l'émulsion contient 50 à 95 % d'eau par rapport au poids de monomère(s).

12. Procédé selon l'une des revendications 1 à 11 caractérisé en ce que l'on poursuit la polymérisation jusqu'à un taux de conversion d'au moins 95 %.

13. Latex de polymère de chloroprène obtenu par le procédé selon l'une des revendications 1 à 12.

Office européen
des brevets

**RAPPORT DE RECHERCHE EUROPEENNE**

Numero de la demande

EP 91 40 1159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 536 970 (BAYER) <br> * Revendication 1; exemples * & FR-A-2 333 818 (Cat. D) <br> --- | 1 | C 08 F 36/18 <br> C 08 F 2/24 |
| A | FR-A-2 266 705 (HÜLS) <br> * Revendication 1; page 4, lignes 4-5,7-8 * <br> ----- | 7 | |

DOMAINES TECHNIQUES RECHERCHES (Int. Cl.5)

C 08 F

Le présent rapport a été établi pour toutes les revendications

| Lieu de la recherche | Date d'achèvement de la recherche | Examinateur |
|---|---|---|
| LA HAYE | 28-08-1991 | VAN HUMBEECK F.W.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P0403)

13